# EUROPEAN PATENT APPLICATION

(11) **EP 2 253 595 A1**
(43) Date of publication of application: **24.11.2010**
(21) Application number: 09160358.9
(22) Date of filing: 15.05.2009
(51) Int. Cl.: C02F 3/12, C02F 3/22

(54) **Three-stage system for treating sewage**

(71) Applicant: Ekkelenkamp, Gerrit, 8147 RK Giethmen (NL)
(72) Inventor: Ekkelenkamp, Gerrit, 8147 RK Giethmen (NL)
(74) Representative: Bartelds, Erik

(57) **Abstract**

The invention relates to a system for treating sewage, which system comprises a pre-treatment chamber, an aerating chamber, an at least partially conical settling tank and a post-treatment chamber.

The settling tank is arranged in the aerating chamber, thus increasing the effective volume of the post-treatment chamber. The settling tank may be arranged in the center of the aerating chamber and may extend over the full height of the aerating chamber.

An airlift may extend from a lower part of the aerating chamber to the settling tank for transferring aerated sewage thereto.

A return line may extend from a lower part of the settling tank to the aerating chamber for returning sludge that has settled in the tank.

The pre-treatment chamber, the aerating chamber and the post-treatment chamber may each be made of a plastics material, in particular a fiber reinforced plastics material.

## Description

The invention relates to a system for treating sewage, said system comprising a pre-treatment chamber, an aerating chamber, an at least partially conical settling tank and a post-treatment chamber. Such a system is commercially available from Boralit (www.boralit.nlu) under the trade name Boralit SuperCompact IBA system.

An IBA (Individuele Behandeling Afvalwater - Individual Treatment of Sewage) system is used to process sewage from households or industries which are not connected to a municipal sewer system. The IBA system is intended to clean the sewage to such extent that it can be safely discharged into the environment.

The prior art system consists of three upright cylindrical bodies, which are connected both mechanically and hydraulically.

The first body defines a pre-treatment chamber, which has a feed opening for receiving an influent, in particular raw sewage from e.g. a household or industry. In the pre-treatment chamber the raw sewage is already partially broken down by anaerobic microorganisms. The sewage is further segregated by gravity, since relatively heavy solid parts will sink and settle on the bottom of the pre-treatment chamber, while lighter parts will float to the surface. An overflow pipe near the top of the cylindrical bodies connects the pre-treatment chamber with the aerating chamber. As raw sewage continues to enter the pre-treatment chamber, part of the pre-treated sewage will flow to the aerating chamber through the overflow pipe.

The aerating chamber is defined by the second body. In this chamber air is injected into the sewage to activate and stimulate aerobic microorganisms. These aerobic microorganisms further break down any contaminants in the sewage, thus cleaning the sewage to a significant extent. An airlift is provided in the aerating chamber to transfer the partially cleaned sewage to a partially conical settling tank that is arranged in the post-treatment chamber.

The post-treatment chamber is defined by the third body and is divided into two separate treatment areas, one within the settling tank and one outside the settling tank. The partially cleaned sewage enters the settling tank, where solid particles settle at the bottom in the form of sludge. This sludge is then returned to the aerating chamber through a return line. The remainder of the sewage, which by now is partially clarified, flows through an overflow pipe into the post-treatment area between the third cylindrical body and the settling tank. Post-treatment of the sewage involves further settling of sludge, after which the supernatant is sufficiently cleaned to be discharged as effluent into the environment without any harmful effect.

Although this prior art system has proven effective at cleaning sewage, there are still instances where the extent of cleaning that can be achieved is insufficient, so that the effluent that is discharged into the environment does not meet regulations and is potentially harmful. In particular, the amount of solids floating in the sewage in the post-treatment chamber and discharged with the effluent may be too great. It is believed that this may be due to the fact that the volume of the post-treatment chamber is too small for some sewage flows.

The invention therefore has for its object to provide a system for treating sewage which is more effective than the prior art system. In accordance with the invention, this is accomplished in a system as defined in the preamble in that the settling tank is arranged in the aerating chamber. By arranging the settling tank in the aerating chamber, rather than in the post-treatment chamber, the effective volume of the pots-treatment chamber is increased. In this way a greater percentage of the remaining solids is allowed to settle and the effluent becomes cleaner.

In a preferred embodiment of the sewage treatment system of the invention the settling tank is arranged substantially in the center of the aerating chamber and extends over substantially the full height of the aerating chamber. In this way the settling tank may be sufficiently large to provide an effective segregation, without disturbing the cleaning of the sewage by the aerobic microorganisms in the aerating chamber.

The sewage treatment system preferably includes an airlift extending from a lower part of the aerating chamber to the settling tank. This airlift system may transfer aerated sewage from the aerating chamber to the settling tank. In a preferred embodiment of the system the airlift debouches in a lower part of the settling tank. In this way the aerated sewage, which comprises biomass including activated sludge, is transferred directly to the settling area.

In order to maintain continuous processing of the sewage in the aerating chamber the system of the invention preferably includes a return line extending from a lower part of the settling tank to the aerating chamber for returning sludge that has settled in the tank. In this way the biomass in the aerating chamber, which includes activated sludge, is continuously replenished.

The return line preferably debouches in an upper part of the aerating chamber. In this way the sludge that is being returned has to travel a long way through the aerating chamber, thus allowing it to be extensively aerated.

The system of the invention preferably further includes an aerating member arranged in a lower part of the aerating chamber. Since the aerating member is arranged near the bottom of the aerating chamber the air, which will rise in the chamber, will have a long path through the sewage.

For an optimal distribution of air bubbles throughout the aerating the aerating member is preferably disk-shaped.

In order to reduce the amount of moving parts to an absolute minimum the airlift and the aerating member may be connected to a common source of air. Efficient aerating and an efficient airlift are obtained when the common source of air comprises an air pump.

In order to subject the sewage to a final cleaning step the system of the invention preferably comprises a transfer line extending from an upper part of the settling tank to a lower part of the post-treatment chamber for transferring partially clarified sewage thereto. Here again, the sewage is directly introduced into the settling area.

The pre-treatment chamber, the aerating chamber and the post-treatment chamber are each preferably made of a plastics material, in particular a fiber reinforced plastics material. In this way the weight of the system is reduced in comparison to systems which include one or more chambers made of concrete. This allows the system to be installed using relatively simple equipment, without any extensive preparation of the soil at the location where the system is to be installed.

A structurally efficient system, which is easy to manufacture, to install and to maintain, is achieved when each of the pre-treatment chamber, the aerating chamber and the post-treatment chamber is defined by a substantially upright cylindrical body having a man-hole in an upper part thereof. For ease of installation the cylindrical bodies may be mutually connected to form a unitary system.

The invention is now elucidated by way of an exemplary embodiment, with reference being made to the annexed drawings, in which:

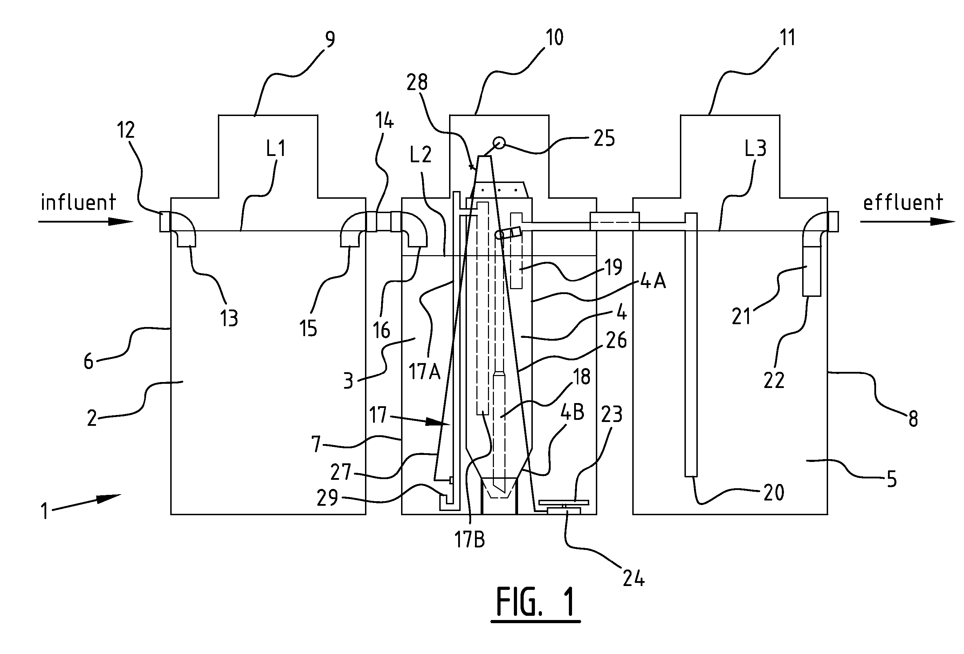

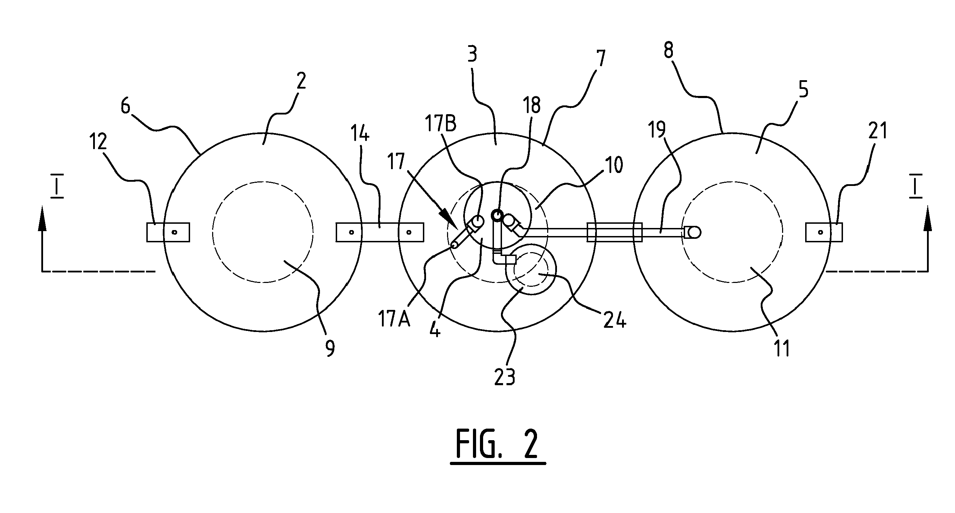

Fig. 1 is a schematic longitudinal sectional view of a system in accordance with an embodiment of the invention along the line I-I in fig. 2, and
Fig. 2 is a top view of the system of fig. 1.
A system 1 for treating sewage comprises a pre-treatment chamber 2, an aerating chamber 3, an at least partially conical settling tank 4 and a post-treatment chamber 5. The pre-treatment chamber 2, the aerating chamber 3 and the post-treatment chamber 5 are each defined by an upright cylindrical body 6, 7 and 8 having a man-hole 9, 10 or 11 in an upper part thereof. In the illustrated embodiment the cylindrical bodies 6-8 are mutually connected to form a unitary system 1.

The pre-treatment chamber 2 has an inflow pipe 12 through which an influent, in particular raw sewage, is introduced into the pre-treatment chamber 2. This inflow pipe defines a feed opening 13 which is arranged below a normal sewage level L1 in the pre-treatment chamber 2. An overflow pipe 14 connects the pre-treatment chamber 2 with the aerating chamber 3. This overflow pipe 14 has an inflow opening 15 which is also arranged below the normal sewage level L1, in order to avoid picking up light solids which float at or near the surface of the sewage.

The overflow pipe 14 further has an outflow opening 16 which debouches in the aerating chamber 3, outside the settling tank 4. The settling tank 4 has a cylindrical upper part 4A and a conical lower part 4B, and is arranged near the center of the aerating chamber 3. An airlift 17 extends from a lower part of the aerating chamber 3 to the settling tank 4. The airlift 17 includes a first part 17A extending from a position near the bottom of the aerating chamber 3 to a position near the top of the settling chamber 4, and a second part 17B which extends downward into the settling chamber 4. The airlift 17 is intended to transfer aerated sewage from the aerating chamber 3 to the settling tank 4.

A return line 18 extends from a position near the bottom of the settling tank 4 to the aerating chamber 3. This return line 18 is intended to return sludge that has settled in the tank 4, since this sludge contains biologically active aerobic microorganisms that are necessary for maintaining the cleaning process in the aerating chamber 3. A transfer line 19 extends from an upper part of the settling tank 4 to a lower part of the post-treatment chamber 5 and includes an outflow opening 20 that debouches near the bottom of the post-treatment chamber 5. The transfer line 19 is intended to transport partially clarified sewage from the settling tank 4 to the post-treatment chamber 5.

And finally, the post-treatment chamber 5 includes a discharge pipe 21 through which an effluent, in particular biologically cleaned sewage, is discharged into the environment. This discharge pipe 21 also has an inflow opening 22 which is also arranged below the normal sewage level L3 in the post-treatment chamber 5, in order to avoid picking up any solids which might float at or near the surface of the sewage.

An aerating member 23 is arranged in a lower part of the aerating chamber 3 near the bottom thereof. In the illustrated embodiment this aerating member 23 is disk-shaped and is provided with a large number of openings to form fine air bubbles, which are evenly distributed over the surface of the aerating member 23. The aerating member 23 is attached to a heavy foot 24, e.g. a concrete foot, to keep it down and is connected to a pull chord or cable (not shown here) to allow it to be hoisted out of the chamber 3 for maintenance or renewal. The aerating member 23 is supplied with air from the same source 25 that also feeds the airlift 17. This air source 24 includes an air pump (not shown here), which draws in ambient air and compresses the air before directing it to the aerating member 23 through an air supply line 26.

Another supply line 27 runs from the source of air 25 to the lower part of the riser 17A of the airlift 17. A valve 28 in this air supply line 27 is used to adjust the lifting force provided by the airlift 17.

Treatment of sewage in the system 1 proceeds as follows. Raw sewage enters the pre-treatment chamber 2 through the inflow pipe 12 and is engaged and partially digested by anaerobic microorganisms. Gravity further segregates the sewage, relatively heavy solid parts sinking and settling on the bottom of the pre-treatment chamber and lighter parts floating to the surface. As more raw sewage enters the pre-treatment chamber 2, e.g. when a toilet is flushed or a wash basin is emptied, part of the pre-treated sewage will flow to the aerating chamber 3 through the overflow pipe 14.

In the aerating chamber 3 the anaerobic sewage is mixed with aerobic biomass. The contents of this chamber 3 are continuously aerated by air bubbling from the aerating member 23 to activate and stimulate aerobic microorganisms in the biomass. These aerobic microorganisms attack and digest contaminants in the sewage, thus significantly cleaning the sewage. The air bubbles are so fine that the oxygen will bind to water in the sewage. The mixture of partially cleaned sewage and biomass is pumped into the settling tank 4 by the airlift 17.

Since the biomass including activated sludge is heavier than water, it will sink and settle in the conical lower part of the settling tank 4. This leads to an increase in pressure near the conical bottom of the settling tank 4, which in turn will force part of the sludge up through the return line 18. Thus the sludge is returned to the aerating chamber 3. The partially clarified remainder of the sewage is forced from the settling tank 4 by the inflow of sewage through the airlift 17 and flows through the transfer line 19 into the post-treatment chamber 5.

In the post-treatment chamber 5 the sewage is further clarified by settling of remaining sludge. The supernatant finally leaves the system 1 through the discharge pipe 21. Since the entire volume of the post-treatment chamber 5 is available for the sewage, it will be relatively still, so that all remaining solids may settle. Therefore, the supernatant liquid will be extensively cleaned and can be discharged into the environment without any harmful effect.

In this way the invention provides a very efficient system for treatment of sewage.

Although the invention has been described by reference to an exemplary embodiment, it will be apparent that many modifications are conceivable within the scope of the following claims.

## Claims

1. A system for treating sewage, said system comprising a pre-treatment chamber, an aerating chamber, an at least partially conical settling tank and a post-treatment chamber, **characterized in that** the settling tank is arranged in the aerating chamber.

2. The system of claim 1, **characterized in that** the settling tank is arranged substantially in the center of the aerating chamber and extends over substantially the full height of the aerating chamber.

3. The system of claim 1 or 2, **characterized by** an airlift extending from a lower part of the aerating chamber to the settling tank for transferring aerated sewage thereto.

4. The system of claim 3, **characterized in that** the airlift debouches in a lower part of the settling tank.

5. The system of any of the preceding claims, **characterized by** a return line extending from a lower part of the settling tank to the aerating chamber for returning sludge that has settled in the tank.

6. The system of claim 5, **characterized in that** the return line debouches in an upper part of the aerating chamber.

7. The system of any of the preceding claims, **characterized by** an aerating member arranged in a lower part of the aerating chamber.

8. The system of claim 7, **characterized in that** the aerating member is disk-shaped.

9. The system of claims 3 and 7 or 8, **characterized in that** the airlift and the aerating member are connected to a common source of air.

10. The system of claim 9, **characterized in that** the common source of air comprises an air pump.

11. The system of any of the preceding claims, **characterized by** a transfer line extending from an upper part of the settling tank to a lower part of the post-treatment chamber for transferring partially clarified sewage thereto.

12. The system of any of the preceding claims, **characterized in that** the pre-treatment chamber, the aerating chamber and the post-treatment chamber are each made of a plastics material, in particular a fiber reinforced plastics material.

13. The system of any of the preceding claims, **characterized in that** each of the pre-treatment chamber, the aerating chamber and the post-treatment chamber is defined by a substantially upright cylindrical body having a man-hole in an upper part thereof.

14. The system of claim 13, **characterized in that** the cylindrical bodies are mutually connected to form a unitary system.
